# FASCICULE DE BREVET EUROPEEN

(11) **EP 1 610 112 B1**
(45) Date de publication et mention de la délivrance du brevet: **22.08.2007**
(21) Numéro de dépôt: 05291311.8
(22) Date de dépôt: 20.06.2005
(51) Int. Cl.: G01M 19/00, A01C 17/00

(54) **Procédé de mesure de la répartition dépandage pour épandeurs de particules**
Messverfahren der Streuverteilung für Partikelstreuer
Measuring method of spread distribution for a particle spreader

(30) Priorité: 21.06.2004 FR 0406698
(43) Date de publication de la demande: 28.12.2005
(73) Titulaire: CENTRE NATIONAL DU MACHINISME AGRICOLE, DU GENIE RURAL, DES EAUX ET DES FORETS (CEMAGREF), 92160 Antony (FR)
(72) Inventeur: Piron, Emmanuel, 03300 Creuzier le Vieux (FR); Miclet, Denis, 63200 Malauzat (FR)
(74) Mandataire: Laget, Jean-Loup

(56) Documents cités:
- DD-A1- 214 988
- DE-A1- 3 604 449
- DE-A1- 4 105 046
- SU-A1- 1 473 734

## Description

La présente invention vise un procédé de mesure de la répartition d'épandage pour épandeurs de particules à épandre ainsi qu'un dispositif de mesure de la répartition d'épandage pour épandeurs de particules.

Dans le domaine de l'épandage, que ce soit d'engrais minéraux ou organiques ou de sel pour les routes, on doit obtenir un épandage fiable et régulier. De manière à évaluer et contrôler la qualité des épandages réalisés par les appareils d'épandage proposés, on réalise différents « passages au banc d'essai » desdits appareils.

Lors de ces « passages au banc d'essai », on recueille le matériau épandu sur une zone transversale au déplacement de l'engin d'épandage de manière à éditer une courbe caractéristique d'épandage. Ces passages au banc d'essai sont réalisés à l'heure actuelle selon plusieurs techniques possibles qui sont principalement : banc fixe et appareil mobile longitudinalement, banc mobile longitudinalement et appareil fixe. On procède alors de la manière suivante : on passe l'appareil en mode d'épandage au-dessus du banc ou le banc sous l'appareil pour collecter de façon discrétisée les quantités de granulés distribuées transversalement , on pèse les quantités recueillies à chaque pas transversal, on transfère ces données vers des moyens de traitement et on calcule et édite la courbe caractéristique transversale de l'épandage.

Les appareils couramment utilisés dans l'épandage de particules ou granulés minéraux ou organiques, proposent une dispersion centrifuge des particules ou granulés au moyen d'un (de plusieurs) disque(s) muni(s) de pales et entraîné(s) en rotation. Le produit épandu se trouve ainsi réparti au sol sous la forme d'une nappe d'épandage dont le point central est le centre du disque. Une telle nappe d'épandage est modélisable par deux distributions caractéristiques l'une selon un angle et l'autre selon le rayon de projection.

Lors de l'épandage, l'appareil avance ce qui provoque des recouvrements successifs de ces nappes les unes sur les autres et il est alors possible de distribuer sur une surface rectangulaire perpendiculaire à l'axe d'avancement les quantités de particules données. Lorsqu'elles sont représentées sur une courbe, ces quantités distribuées présentent une hétérogénéité depuis l'axe de passage de l'appareil vers les extrêmes transversaux (décroissance vers l'extrémité).

Ainsi pour un appareil destiné à réaliser un travail correct avec un intervalle entre passages de Xm, il peut couramment arriver que les projections de granulés atteignent Xm à droite et Xm à gauche de l'axe d'avancement. Dans le cas particulier des épandeurs agricoles, en particulier destinés à la fertilisation, qui peuvent présenter une distance entre les passages de l'ordre de 45 m actuellement, la projection d'engrais possible se trouve du même ordre, c'est-à-dire sur près de 90 m de large et sur des longueurs de 45 m de long. Pour réaliser correctement les passages au banc d'essai, il est alors nécessaire de prévoir des halls de réception pour de tels essais sans structures porteuses intérieures ce qui implique des bâtiments de plus de 100 m de large sur 60 à 80 m de long.

De telles structures destinées à réaliser des contrôles de qualité des appareils sont non seulement difficiles à mettre en oeuvre mais entraînent des coûts importants.

De plus, la répartition transversale d'épandage est une représentation intégrative et donc simplifiée de l'épandage. Elle consiste à matérialiser les quantités globales de matières épandues transversalement à un point donné de la trajectoire d'avancement de la machine, elle ne permet donc pas de connaître les caractéristiques réelles de l'épandage, réalisé par un disque rotatif sous la forme spatialisée au sol.

Des procédés et dispositifs selon l'état de la technique antérieure sont décrit dans les documents DEA 4105046, DE A 3604449, DD B 214988 et SU A 1473734.

Le but à la base de la présente invention est donc de pouvoir proposer un nouveau procédé de mesure de la répartition d'épandage pour épandeurs de particules permettant d'évaluer le travail réel effectué par les appareils d'épandage par projection centrifuge.

Un autre but de l'invention est permettre l'évaluation d'un appareil d'épandage par projection centrifuge de grande largeur de travail même dans des bâtiments de dimensions, et donc de coûts, raisonnables.

A cet effet, l'invention a pour objet un procédé de mesure de la répartition d'épandage pour distributeurs de particules à épandre, du type présentant une distribution centrifuge des particules par un disque, caractérisé en ce qu'on entraîne en rotation autour d'un axe choisi, le distributeur de particules à distribution centrifuge par rapport à une rangée ou banc fixe de bacs de collecte et de mesure desdites particules, ledit distributeur étant placé de préférence à proximité des premiers bacs de collecte, on mesure, sur une plage angulaire définie, à chaque position angulaire relative du distributeur par rapport au banc, les quantités de particules distribuées sur le banc complet, on enregistre en continu les données de mesure de la quantité de particules et les valeurs angulaires correspondantes, et on calcule à partir desdites données et valeurs la nappe de répartition au sol ainsi que les distributions transversales d'épandage.

De manière avantageuse, le procédé selon l'invention permet de définir la répartition obtenue pour les réglages et les conditions du test sans avoir besoin de faire réaliser au distributeur une révolution complète.

De préférence, les données brutes de la répartition au sol sont traitées de façon spatiale afin d'établir la nappe de répartition au sol.

A partir de la nappe de répartition au sol, il est possible de calculer par sommation des quantités collectées selon un axe, la répartition transversale obtenue pour les réglages et les conditions du test.

Selon que le test ait été réalisé avec un ou plusieurs disques d'épandage, il est envisageable d'éditer la courbe transversale symétrique à celle mesurée, la courbe représentant l'épandage total pour un passage du distributeur, le résultat transversal d'épandage avec recouvrement des passages successifs pour un intervalle de passage programmé, ainsi que les courbes des Coefficients de variation (CV) en fonction des intervalles de passage.

L'invention a également pour objet un dispositif de mesure de la répartition d'épandage pour distributeurs de particules à épandre, du type présentant une distribution centrifuge des particules par un disque, caractérisé en ce qu'il comporte un banc de mesure fixe des quantités de granulés réparties au sol constitué d'une rangée de bacs de collecte pourvus de moyens de mesure de la quantité de particules distribuées, un support pour le distributeur de particules positionné de préférence à proximité directe des premiers bacs de collecte et agencé pour entraîner en rotation ledit distributeur autour d'un axe de rotation choisi et des moyens d'acquisition et de mémorisation au moins des données de mesure de la quantité de particules distribuées et des positions angulaires du distributeur par rapport au banc de mesure.

L'axe de rotation choisi peut être quelconque ou de façon avantageuse l'axe de rotation d'un disque d'épandage ou le centre de la poutre entre deux disques d'épandage d'un même distributeur.

De préférence, le banc de mesure des quantités de particules réparties au sol est constitué d'un ensemble porte bacs disposé à un poste fixe à l'intérieur d'un hall d'essai. L'ensemble porte-bacs est réalisé sous forme d'un châssis porteur pouvant comporter sur ses différentes faces, des dispositifs protecteurs étanches aux poussières et être parcouru par un dispositif destiné à maintenir constantes les conditions d'ambiance telles que la température, l'hygrométrie, etc. Ce châssis est agencé pour permettre de disposer l'un des bacs de la rangée de bacs à la verticale de l'axe de rotation du distributeur choisi pour le test.

Le même châssis, ou un deuxième châssis pouvant être indépendant du premier, permet de porter les moyens de mesure de la quantité de particules épandues. Ces moyens de mesure sont de préférence constitués d'ensembles de pesage. Ainsi, on prévoit un ensemble de pesage par bac, cet ensemble étant constitué d'un réceptacle de particules à peser ainsi que d'un capteur destiné à mesurer le poids des particules collectées dans le réceptacle. De préférence, le capteur présente une sensibilité d'environ 200 grammes par exemple. Chaque capteur est associé à des moyens de conditionnement de signal permettant le réglage et l'appairage de l'ensemble des moyens de mesure disposés dans la rangée de bacs, ces réglages et appairages peuvent être réalisés à distance ou non.

Les données mesurées par les capteurs de mesure sont ensuite envoyées depuis les moyens de conditionnement de signal vers des moyens d'acquisition et d'enregistrement à l'aide de moyens de transmission filaires ou sans fil.

Chaque bac comporte de préférence un système de vidange automatique qui, une fois le test terminé, vide les bacs.

Le support pour le distributeur est disposé à proximité du premier bac constituant le banc de mesure des quantités de particules réparties au sol.

Il comporte une première partie statorique fixe montée sur un support ou directement au sol et une partie rotorique dont la rotation est générée par des moyens d'entraînement appropriés. Ces moyens d'entraînement sont agencés pour entraîner en rotation le distributeur selon une vitesse angulaire soit fixée soit programmable à distance, par pas successifs ou en continu.

Dans le cas d'un système porté, la révolution complète du distributeur autour de l'axe de rotation choisi est possible alors que dans le cas d'une structure porteuse au sol, la révolution e'st possible dans une plage angulaire de -160° à +160° par exemple, plage angulaire suffisante pour réaliser un test.

De préférence, la partie rotorique du support présente des moyens d'attelage et d'entraînement du distributeur de particules à épandre. Ces moyens d'attelage sont de préférence installés sur une interface destinée à permettre les réglages selon l'axe longitudinal et l'axe transversal de la position du distributeur de manière à faire coïncider l'axe de rotation de la partie rotorique avec celui choisi pour caractériser le distributeur.

Cet axe de rotation peut être l'axe de rotation du disque d'épandage à caractériser ou celui correspondant à l'intersection de l'axe d'avancement normal du distributeur avec l'axe reliant les disques de ce dernier si l'on choisit d'évaluer le distributeur lors de son fonctionnement normal.

De préférence, la hauteur du distributeur par rapport au niveau des bacs de collecte est réglable pour s'adapter aux différentes prescriptions d'épandage. La position angulaire de la partie rotorique par rapport à la partie statorique du support est mesurée à l'aide d'un capteur tel qu'un codeur optique par exemple et est enregistrée en continu pendant le test.

Le support du distributeur peut être muni de capteurs destinés à peser et à évaluer en continu ou non, la quantité de particules à épandre présente dans la trémie.

De préférence, les moyens d'acquisition et d'enregistrement des valeurs données par les différents capteurs à savoir pesée des bacs de collecte, valeur d'angle du distributeur par rapport au banc de mesure, pesée de la machine d'épandage, présentent une fréquence d'échantillonnage paramétrable en fonction de la précision souhaitée et de la qualité du conditionnement des signaux réalisé. Les conditions d'ambiance sont elles aussi enregistrées pour chaque essai.

On décrira maintenant l'invention plus en détail en référence au dessin dans lequel :
la figure 1 représente une vue schématique du dessus d'un dispositif selon l'invention ;
la figure 2 représente le dispositif de la figure 1 selon quatre positions de fonctionnement ;
la figure 3 représente une vue schématique du dispositif de la figure 1 à l'extrémité du banc de mesure ;
les figures 4a, 4b et 4c représentent de manière schématique trois formes de représentations différentes d'une répartition obtenue par un procédé selon l'invention.

Le dispositif de mesure de la répartition d'épandage pour distributeurs de particules à épandre selon l'invention comporte un banc 1 de mesure fixe des quantités de granulés réparties au sol constitué d'une rangée de bacs de collecte 2 pourvus de moyens de mesure 3 de la quantité de particules distribuées, un support 4 pour le distributeur 5 de particules positionné de préférence à proximité directe du premier bac de collecte 2 et agencé pour entraîner en rotation ledit distributeur 5 autour d'un axe de rotation choisi et des moyens d'acquisition et de mémorisation au moins des données de mesure de la quantité de particules distribuées et des positions angulaires du distributeur par rapport au banc de mesure 1.

Le support 4 pour le distributeur 5 comporte une première partie statorique fixe montée sur un support ou directement au sol et une partie rotorique 4a dont la rotation est générée par des moyens d'entraînement appropriés. Ces moyens d'entraînement sont agencés pour entraîner en rotation le distributeur 5 selon une vitesse angulaire soit fixée soit programmable à distance, par pas successifs ou en continu.

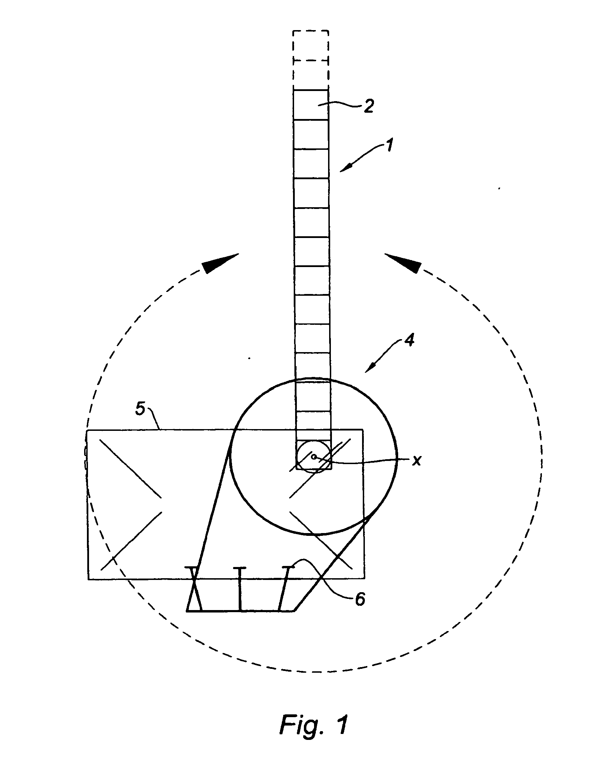

Le partie rotorique 4a du support 4 présente également des moyens d'attelage et d'entraînement 6 du distributeur 5 de particules à épandre. Ces moyens d'attelage 6 sont de préférence installés sur une interface destinée à permettre les réglages dans l'axe longitudinal et l'axe transversal de la position du distributeur, de manière à faire coïncider l'axe de rotation X de la partie rotorique 4a avec celui choisi pour caractériser le distributeur 5, dans la figure 1 l'axe de rotation x d'un disque du distributeur 5.

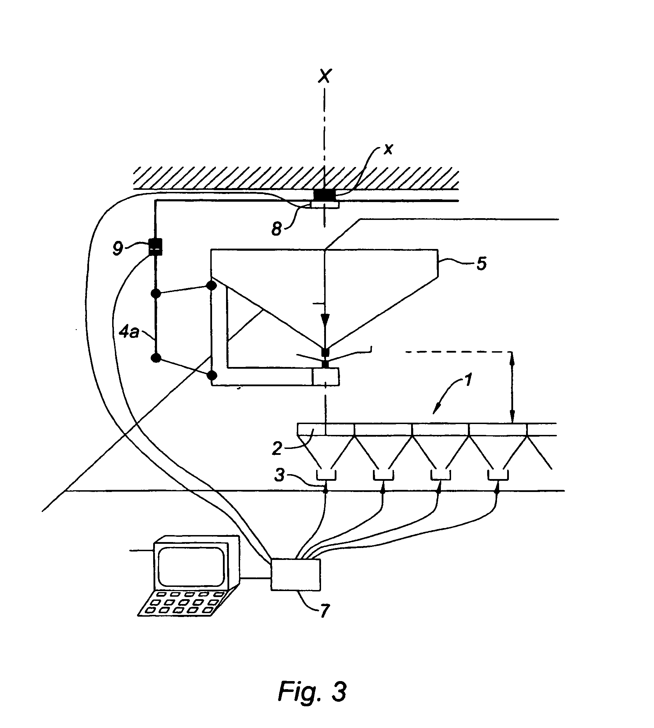

Comme on peut le voir à la figure 3, l'un des premiers bacs de collecte 2 du banc de mesure 1 est ménagé de préférence à la verticale du point de rotation choisi pour le test, ici le centre du disque d'épandage.

Chaque moyen de pesage 3 lié à un bac de collecte peut être relié à des moyens de conditionnement de signal 7 permettant le réglage et l'appairage de l'ensemble des moyens de mesure 3 disposés dans le banc de mesure 1. De même, les autres moyens de mesure comme le moyen de mesure de l'angle 8 entre la partie statorique du support 4 et sa partie rotorique 4a tel qu'un codeur optique, le moyen de pesée 9 du distributeur 5 tel qu'une jauge de contrainte sont également reliés auxdits moyens de conditionnement de signal 7.

Les moyens de conditionnement de signal envoient ensuite lesdits signaux traités vers les moyens d'enregistrement et de traitement.

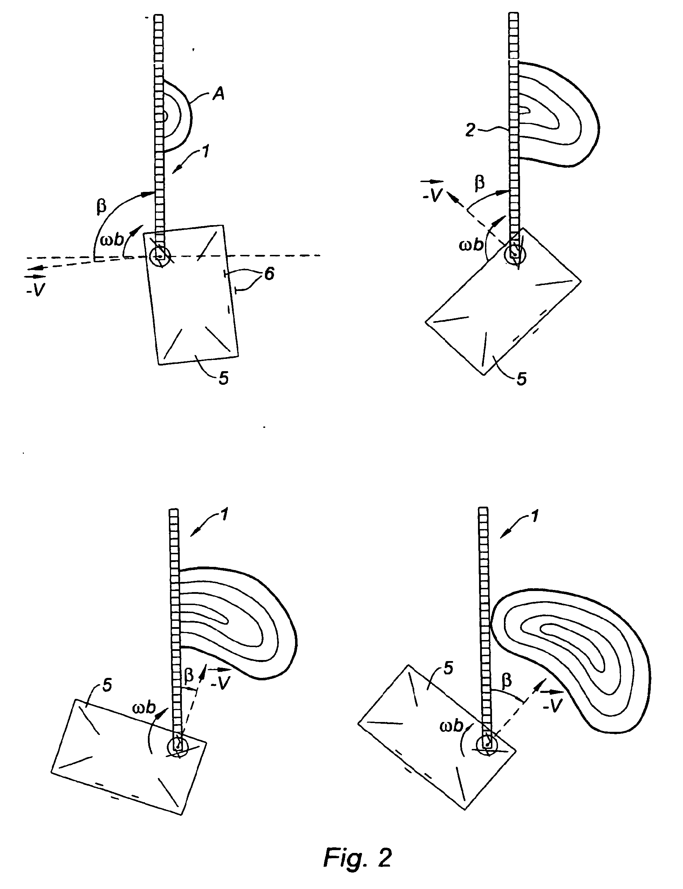

Comme on peut le voir à la figure 2, à chaque position relative (p) du distributeur 5 par rapport au banc de mesure 1, les quantités distribuées sur l'ensemble du banc de mesure 1 sont mesurées ce qui permet d'établir la répartition spatiale au sol par étapes successives A, position relative par position relative comme le montre la figure 2.

Les données de pesée ainsi que les valeurs angulaires β sont enregistrées en continu au cours du test, et une fois ledit test terminé, les données brutes de la répartition au sol peuvent être traitées de façon spatiale afin d'établir la nappe de répartition au sol.

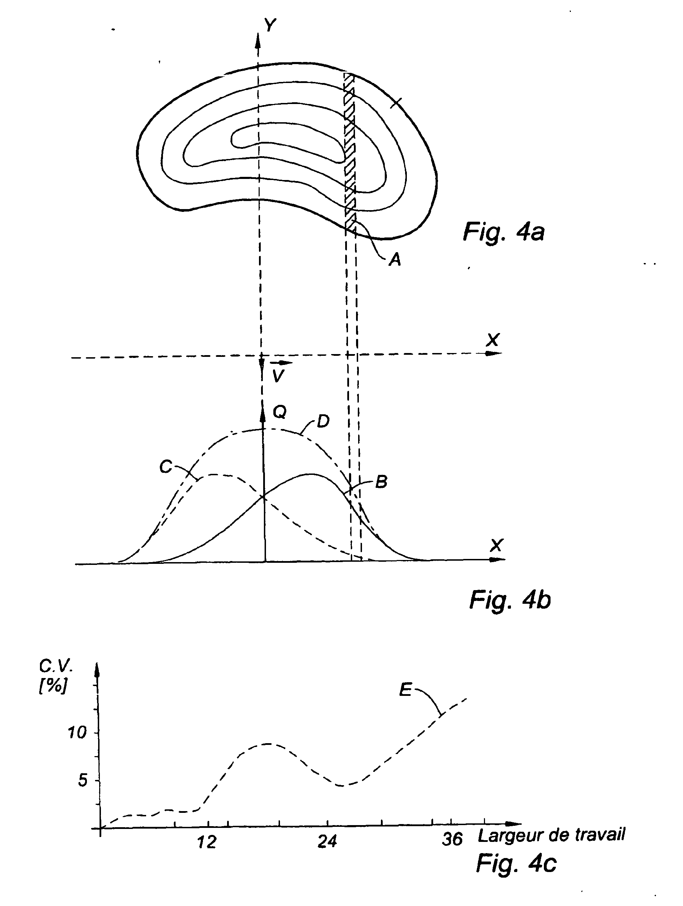

La figure 4a représente la nappe de répartition au sol obtenue pendant un essai selon le procédé de l'invention. A partir de celle-ci, il est possible de calculer par sommation des quantités collectées selon l'axe X (A), la répartition transversale obtenue pour les réglages et les conditions de l'essai, représentée figure 4b par la courbe B. Selon que cet essai ait été réalisé avec un ou plusieurs disques d'épandage, il est possible d'éditer la courbe transversale symétrique (C) à celle mesurée pour le cas d'un seul disque, la courbe D représentant l'épandage total pour un passage du distributeur ou encore le résultat transversal d'épandage avec recouvrement des répartitions des différents disques et enfin la courbe des coefficients de variations E.

## Revendications

1. Procédé de mesure de la répartition d'épandage pour distributeurs (5) de particules à épandre, du type présentant une distribution centrifuge des particules par un disque,
**caractérisé en ce qu**'on entraîne en rotation autour d'un axe chois (X), le distributeur (5) de particules à distribution centrifuge par rapport à une rangée ou banc fixe (1) de bacs de collecte (2) et de mesure desdites particules, ledit distributeur (5) étant placé de préférence à proximité des premiers bacs de collecte, on mesure, sur une plage angulaire définie, à chaque position angulaire (β) relative du distributeur par rapport au banc, les quantités de particules distribuées sur le banc complet, on enregistre en continu les données de mesure de la quantité de particules et les valeurs angulaires correspondantes, et on calcule à partir desdites données et valeurs la nappe de répartition au sol ainsi que les distributions transversales d'épandage.

2. Procédé selon la revendication 1,
**caractérisé en ce que** l'axe de rotation choisi (X) est l'axe de rotation d'un disque d'épandage (X).

3. Procédé selon la revendication 1.
**caractérisé en ce que** l'axe de rotation choisi (X) est le centre de la poulie entre deux disques d'épandage d'un même distributeur.

4. Dispositif de mesure de la répartition d'épandage pour distributeurs de particules à épandre (5), du type présentant une distribution centrifuge des particules par un disque, comportant un banc de mesure fixe (1) des quantités de granulés réparties au sol constitué d'une rangée de bacs de collecte (2) pourvus de moyens de mesure de la quantité de particules distribuées, et un support (4) pour le distributeur de particules positionné de préférence à proximité directe des premiers bacs de collecte, **caractérisé en ce que** ledit support est agencé pour entraîner en rotation ledit distributeur autour d'un axe de rotation choisi (X) et **en ce qu'**il comporte des moyens d'acquisition (3) et de mémorisation des données de mesure de la quantité de particules distribuées et des positions angulaires (8) du distributeur par rapport au banc de mesure.

5. Dispositif selon la revendication 4,
**caractérisé en ce que** le banc de mesure (1) des quantités de particules réparties au sol est constitué d'un ensemble porte bacs réalisé sous forme d'un châssis porteur agence pour permettre de disposer l'un des premiers bacs de la rangée de bacs à la verticale de l'axe de rotation du distributeur, un deuxième châssis pouvant être indépendant du premier châssis permettant de porter les moyens de mesure de la quantité de particules épandues.

6. Dispositif selon la revendication 5,
**caractérisé en ce que** le premier châssis porteur comporte sur ses différentes faces, des dispositifs protecteurs étanches aux poussières et est parcouru par un dispositif destiné à maintenir constantes les conditions d'ambiance telles que la température, l'hygrométrie, etc.

7. Dispositif selon l'une des revendications 5 et 6,
**caractérisé en ce que** les moyens de mesure (3) sont de préférence constitués d'ensembles de pesage, de préférence constitué d'un réceptacle de particules à peser ainsi que d'un capteur destiné à mesurer le poids des particules collectées dans le réceptacle.

8. Dispositif selon l'une des revendications 4 à 7,
**caractérisé en ce que** le support pour le distributeur (4) comporte une première partie statorique fixe montée sur un support ou directement au sol et une partie rotorique (4a) dont la rotation est générée par des moyens d'entraînement appropriés, agencés pour entraîner en rotation le distributeur selon une vitesse angulaire soit fixée, soit programmable à distance, par pas successifs ou en continu.

9. Dispositif selon la revendication 8,
**caractérisé en ce que** la partie rotorique (4a) du support (4) présente des moyens d'attelage et d'entraînement (6) du distributeur (5) de particules à épandre, ces moyens d'attelage (6) étant de préférence installés sur une interface destinée à permettre les réglages selon l'axe longitudinal et l'axe transversal de la position du distributeur de manière à faire coïncider l'axe de rotation (X) de la partie rotorique (4a) avec celui choisi pour caractériser le distributeur (5).

10. Dispositif selon l'une des revendications 4 à 9,
**caractérisé en ce que** les moyens d'acquisition (3) et d'enregistrement des valeurs données par les différents capteurs à savoir au moins la pesée des bacs de collecte et la valeur d'angle (β) relative du distributeur par rapport au banc de mesure présentent une fréquence d'échantillonnage paramétrable en fonction de la précision souhaitée et de la qualité du conditionnement des signaux réalisé.

## Claims

1. Method for measuring the distribution of spreading for distributors (5) of particles to be spread, of the type having centrifugal distribution of the particles by a disc, **characterised in that** the particle distributor (5) with centrifugal distribution is entrained in rotation around a selected axis (X) relative to a row or fixed bay (1) of containers (2) for collection and measurement of the said particles, the said distributor (5) preferably being planed in the vicinity of the first collection containers, measurement is carried out over a predefined angular range, at each angular position (β) of the distributor relative to the bay, of the quantities of particles distributed along the complete bay, continuous recording is carried not of the measurement data of the quantity of particles and the corresponding angular values, and on the basis of these data and values, calculation is carried out of the coating of distribution on the ground, as well as of the transverse spreading distributions.

2. Method according to claim 1, **characterised in that** the axis of rotation (X) selected is the axis of rotation (X) of a spreading disc.

3. Method according to claim 1, **characterised in that** the axis of rotation (X) selected is the centre of the beam between two spreading discs of a single distributor.

4. Device for measuring the distribution of spreading for distributors (5) of particles to be spread, of the type having centrifugal distribution of the particles by a disc, comprising a fixed measuring bay (1) for the quantities of granules distributed on the ground, consisting of a row of collection containers (2) which are provided with means for measuring the quantity of particles distributed, and a support (4) for the particle distributor which is preferably positioned in the direct vicinity of the first collection containers, **characterised in that** the said support is designed to entrain the said distributor in rotation around a selected axis of rotation (X), and **in that** it comprises means (3) for acquisition and storage of the data for measurement of the quantity of particles distributed and of the angular positions (8) of the distributor relative to the measuring bay.

5. Device according to claim 4, **characterised in that** the bay (1) for measuring the quantities of particles distributed on the ground consists of a container-holder assembly produced in the form of a support frame, which is designed to make it possible to dispose one of the first containers in the row of containers vertically to the axis of rotation of the distributor, a second frame which can be independent from the first frame making it possible to support the means for measuring the quantity of particles spread.

6. Device according to claim 5, **characterised in that** the first support frame comprises on its different surfaces protective devices which are sealed against dust, along which frame there travels a device which is designed to maintain constant, the environmental conditions, such as the temperature, hygrometry, etc.

7. Device according to claim 5 or claim 6, **characterised in that** the measuring means (3) preferably consist of weighing assemblies, which preferably consist of a receptacle for particles to be weighed, as well as of a sensor which is designed to measure the weight of the particles collected in the receptacle.

8. Device according to any one of claims 4 to 7, **characterised in that** the support for the distributor (4) comprises a first fixed stator part which is mounted on a support or directly on the ground, and a rotor part (4a), the rotation of which is generated by appropriate drive means which are designed to entrain the distributor in rotation at an angular speed which is either fixed or is programmable remotely, in successive steps or continuously.

9. Device according to claim 8, **characterised in that** the rotor part (4a) of the support (4) has means (6) for coupling with and driving the distributor (5) for particles to be spread, these coupling means (6) preferably being installed on an interface which is designed to permit regulations along the longitudinal axis and the transverse axis of the position of the distributor, such as to make the axis of rotation (X) of the rotor part (4a) coincide with that selected in order to characterise the distributor (5).

10. Device according to any one of claims 4 to 9, **characterised in that** the means (3) for acquisition and recording of the values provided by the different sensors, i.e. at least the weighing of the collection containers and the angle value (B) of the distributor relative to the measuring bay, have a frequency of sampling which can be parameterised according to the precision required and the quality of the conditioning provided of the signals.

## Patentansprüche

1. Verfahren zur Messung der Streuverteilung für Partikelstreuer (b) mit einer Zentrifugalverteilung der Partikel über eine Scheibe, d**adurch gekennzeichnet, dass** der Partikelstreuer (5) mit Zentrifugalverteilung um eine gewählte Achse (X) drehbar zu einer fest stehenden Reihe oder Bank (1) mit Behältern für die Aufnahme (2) und Messung der Partikel angetrieben wird, wobei der Partikelstreuer (5) vorzugsweise in der Nähe der ersten Aufnahmebehälter angeordnet ist, in einem festgelegten Winkelbereich in jeder relativen Winkelposition (β) des Partikelstreuers zur Bank die über die gesamte Bank verteilten Partikelmengen gemessen werden, die Messdaten der Partikelmengen und die zugehörigen Winkelwerte ständig aufgezeichnet werden und ausgehend von den Messdaten und Winkelwerten die Verteilungslage auf dem Boden sowie die Querverteilungen beim Streuen berechnet werden.

2. Verfahren nach Anspruch 1, **dadurch gekennzeichnet, dass** die gewählte Drehachse (X) die Drehachse einer Streuscheibe (x) ist.

3. Verfahren nach Anspruch 1, **dadurch gekennzeichnet, dass** die gewählte Drehachse (X) der Mittelpunkt des Trägers zwischen zwei Streuscheiben desselben Partikelstreuers ist.

4. Vorrichtung zur Messung der Streuverteilung für Partikelstreuer (5) mit einer Zentrifugalverteilung der Partikel über eine Scheibe, die eine feststehende Messbank (1) für die Messung der auf dem Boden verteilten Granulatmengen umfasst, die eine Reihe von Aufnahmebehältern (2), die mit Mitteln für die Messung der Menge der verteilten Partikel versehen ist, und eine Halterung (4) für den Partikelstreuer umfasst, die vorzugsweise in direkter Nähe der ersten Aufnahmebehälter angeordnet ist, **dadurch gekennzeichnet, dass** die Halterung so angeordnet ist, dass sie den Partikelstreuer um eine gewählte Drehachse (X) drehantreibt, und dass Mittel zur Erfassung (3) und Speicherung der Messdaten der Menge der verteilten Partikel und der Winkelpositionen (8) des Partikelstreuers zur Messbank vorgesehen sind.

5. Vorrichtung nach Anspruch 4, **dadurch gekennzeichnet, dass** die Messbank (1) für die Messung der auf dem Boden verteilten Partikelmengen aus einem Behälterträger besteht, der in Form eines Traggestells ausgeführt ist, das so angeordnet ist, dass einer der ersten Behälter der Behälterreihe senkrecht zur Drehachse des Partikelstreuers angeordnet ist, wobei ein zweites Gestell, das von dem ersten Gestell unabhängig sein kann, die Mittel zur Messung der Menge der gestreuten Partikel aufnehmen kann.

6. Vorrichtung nach Anspruch 5, **dadurch gekennzeichnet, dass** das erste Traggestell an seinen verschiedenen Seiten staubdichte Schutzvorrichtungen umfasst und von einer Vorrichtung durchlaufen wird, die dafür vorgesehen ist, die Umgebungsbedingungen wie Temperatur, Luftfeuchtigkeit usw. konstant zu halten.

7. Vorrichtung nach einem der Ansprüche 5 und 6, **dadurch gekennzeichnet, dass** die Messmittel (3) vorzugsweise Wiegeeinheiten umfassen, die vorzugsweise einen Behälter für die zu wiegenden Partikel sowie einen Messwertgeber umfassen, der dafür vorgesehen ist, das Gewicht der in dem Behälter aufgenommenen Partikel zu messen.

8. Vorrichtung nach einem der Ansprüche 4 bis 7, **dadurch gekennzeichnet, dass** die Halterung für den Streuer (4) einen ersten fest stehenden Statorteil, der an einer Halterung oder direkt am Boden befestigt ist, und einen Rotorteil (4a) umfasst, dessen Drehung von geeigneten Antriebsmitteln erzeugt wird, die so angeordnet sind, dass den Streuer mit einer festen oder fernprogrammierbaren Winkelgeschwingkeit schrittweise oder stufenlos drehbar antreiben.

9. Vorrichtung nach Anspruch 8, **dadurch gekennzeichnet, dass** dei Rotorteil (4a) der Halterung (4) Rupplungs und Antriebsmittel (6) für den Partikelstreuer (b) aufweist, wobei die Kupplungsmittel (6) vorzugsweise an einer Schnittstelle angebracht sind, die dafür vorgesehen ist, Einstellungen der Position des Streuers in der Längsachse und in der Querachse zu ermöglichen, so dass die Drehachse (X) des Rotorteils (4a) mit der für die Auslegung des Streuers (5) gewählten Drehachse zusammentrifft.

10. Vorrichtung nach einem der Ansprüche 4 bis 9, **dadurch gekennzeichnet, dass** die Mittel zur Erfassung (3) und Aufzeichnung der von den verschiedenen Messwertgebern gegebenen Werte, das heißt mindestens des Wiegewertes der Aufnahmebehälter und des relativen Winkelwertes (β) des Streuers zur Messbank, eine in Abhängigkeit von der gewünschten Genauigkeit und der Signalaufbereitungsqualität parametrierbare Messfrequenz aufweisen.
